# EUROPEAN PATENT APPLICATION

(11) **EP 4 467 027 A1**
(43) Date of publication of application: **27.11.2024**
(21) Application number: 22933422.2
(22) Date of filing: 24.03.2022
(51) Int. Cl.: A24F 40/57

(54) **AEROSOL GENERATION SYSTEM, CONTROL METHOD, AND PROGRAM**

(71) Applicant: Japan Tobacco Inc., Tokyo 105-6927 (JP)
(72) Inventor: NAGAHAMA, Toru, Tokyo 130-8603 (JP); AOYAMA, Tatsunari, Tokyo 130-8603 (JP); MINATO, Junji, Tokyo 130-8603 (JP)
(74) Representative: Hoffmann Eitle
(86) International application number: PCT/JP2022/014058
(87) International publication number: WO 2023/181281

(57) **Abstract**

[Problem] To provide a mechanism capable of further improving the quality of a user's experience. [Solution] An aerosol generation system comprising: a detection unit that detects information indicating the state of the aerosol generation system; a notification unit that notifies a user of the information; a heating unit that heats an aerosol source to generate an aerosol; and a control unit that controls the notification unit so as to notify of first information in a mode based on the information detected by the detection unit when the heating of the aerosol source is started, during a preheating period including a period during which the heating unit starts to heat the aerosol source and the temperature of the heating unit rises to a preset temperature.

## Description

### Technical Field

The present invention relates to an aerosol generation system, a control method, and a program.

### Background Art

Inhaler devices, such as electronic cigarettes and nebulizers, which generate substances for users to inhale, are widespread. For example, an inhaler device uses a substrate that includes an aerosol source for generating an aerosol and a flavor source for imparting a flavor component to the generated aerosol, thus producing an aerosol with an added flavor component. The user can taste the flavor by inhaling the aerosol generated by the inhaler device with the added flavor component. The action of the user inhaling the aerosol is hereinafter referred to as a puff or a puff action.

Various techniques have been developed to improve the quality of users' experiences using inhaler devices. For example, Patent Literature 1, mentioned below, discloses technology by which an inhaler device is provided with an LED (Light Emitting Diode), and the LED is used to report changes in color or intensity of light for displaying the progress of a smoking experience.

### Citation List

### Patent Literature

| | |
|---|---|
| Patent Literature 1: | JP 2016-509481 A |

### Summary of Invention

### Technical Problem

However, the technology described in Patent Literature 1, mentioned above, is still relatively new since its development, and there remains room for improvement in various perspectives.

Therefore, the present invention has been made in view of the above issue, and it is an object of the present invention to provide a mechanism that can further improve the quality of a user's experience.

### Solution to Problem

In order to solve the above problem, according to one aspect of the present invention, there is provided an aerosol generation system including: a detector that detects information indicating a state of the aerosol generation system; a notifier that notifies a user of the information; a heater that heats an aerosol source to generate an aerosol; and a controller that controls the notifier to provide first information in a mode based on the information detected by the detector at a start of heating the aerosol source during a pre-heating period including a period from when the heater starts heating the aerosol source until a temperature of the heater rises to a predetermined temperature.

The information indicating the state of the aerosol generation system may be a parameter corresponding to the temperature of the heater.

The controller may set a predetermined number of switching timings based on the information detected by the detector at the start of heating the aerosol source, and may control the notifier to switch a notification mode of the first information at each of the set predetermined number of switching timings.

The controller may set shorter intervals between the switching timings as the temperature of the heater at the start of heating the aerosol source, as indicated by the information detected by the detector, is higher.

The controller may set the predetermined number of switching timings at regular intervals.

The controller may control the notifier to end a notification of the first information in a case where the pre-heating period ends.

The pre-heating period may include a period that ends in response to a trigger indicating that a predetermined amount of time has elapsed.

The controller may set a time length of the pre-heating period based on the temperature of the heater at the start of heating the aerosol source, as indicated by the information detected by the detector.

The controller may set timings, obtained by dividing the pre-heating period of the set time length into the predetermined number of equal parts, as the predetermined number of switching timings.

The pre-heating period may include a period that ends in response to a trigger indicating that the temperature of the heater has reached a predetermined temperature.

The notifier may include a display device having the predetermined number of display areas, and the controller may, as switching the notification mode of the first information at the predetermined number of switching timings, increase a number of display areas performing a predetermined display among the predetermined number of display areas whenever the switching timings pass.

The predetermined number of display areas may form one longitudinal shape.

The display device may, as performing the predetermined display, blink the display area(s).

The controller may control the notifier to provide second information, different from the first information, at a timing at which the pre-heating period ends.

The notifier may include a display device having the predetermined number of display areas, and the display device may illuminate all of the predetermined number of display areas as a notification of the second information.

The notifier may include a vibration device, and the vibration device may vibrate as a notification of the second information.

The information indicating the state of the aerosol generation system may include a parameter corresponding to a temperature of the aerosol generation system or an elapsed time since an end of last heating by the heater.

The aerosol generation system may further include a substrate including the aerosol source heated by the heater.

Additionally, to solve the above problem, according to another aspect of the present invention, there is provided a control method for controlling an aerosol generation system, the aerosol generation system including a detector that detects information indicating a state of the aerosol generation system, a notifier that notifies a user of the information, and a heater that heats an aerosol source to generate an aerosol, the control method including: controlling the notifier to provide first information in a mode based on the information detected by the detector at a start of heating the aerosol source during a pre-heating period including a period from when the heater starts heating the aerosol source until a temperature of the heater rises to a predetermined temperature.

Furthermore, to solve the above problem, according to another aspect of the present invention, there is provided a program executed by a computer controlling an aerosol generation system, the aerosol generation system including a detector that detects information indicating a state of the aerosol generation system, a notifier that notifies a user of the information, and a heater that heats an aerosol source to generate an aerosol, the program causing the computer to function as: a controller that controls the notifier to provide first information in a mode based on the information detected by the detector at a start of heating the aerosol source during a pre-heating period including a period from when the heater starts heating the aerosol source until a temperature of the heater rises to a predetermined temperature.

### Advantageous Effects of Invention

According to the present invention as described above, a mechanism that can further improve the quality of a user's experience is provided.

### Brief Description of Drawings

[Fig. 1] Fig. 1 is a schematic diagram schematically illustrating a configuration example of an inhaler device.
[Fig. 2] Fig. 2 is a graph illustrating an example of the transition of the temperature of a heater in the case where temperature control is performed based on a heating profile indicated in Table 1.
[Fig. 3] Fig. 3 is a diagram for describing an example of a notification using a display device according to the present embodiment.
[Fig. 4] Fig. 4 is a diagram for describing an example of a notification according to the present embodiment.
[Fig. 5] Fig. 5 is a flowchart illustrating an example of the flow of a process executed by the inhaler device according to the present embodiment.
[Fig. 6] Fig. 6 is a diagram for describing an example of a notification according to a first modification.
[Fig. 7] Fig. 7 is a diagram for describing an example of a notification according to a second modification.

### Description of Embodiments

A preferred embodiment of the present invention will be described in detail below with reference to the accompanying drawings. Note that, in the present specification and drawings, structural elements having substantially the same functional configuration are denoted by the same reference numeral and overlapping descriptions are omitted.

### <1. Configuration example of inhaler device>

An inhaler device is a device that generates a substance that is inhaled by a user. Hereinafter, the substance generated by the inhaler device will be described as being an aerosol. Alternatively, the substance generated by the inhaler device may be a gas

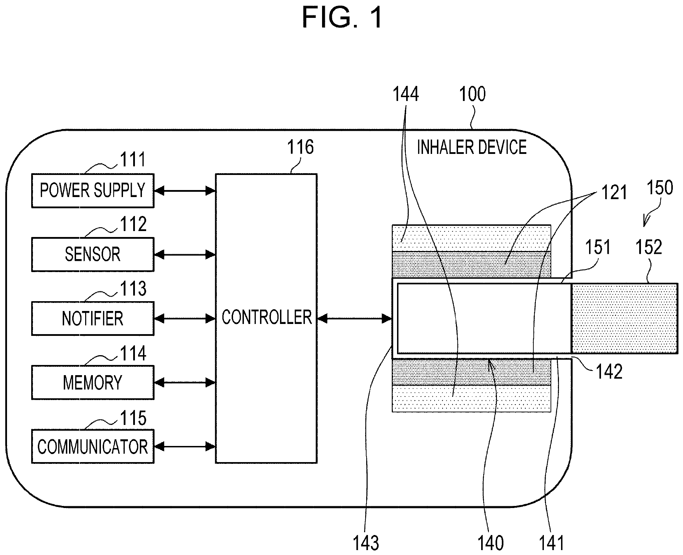

Fig. 1 is a schematic diagram schematically illustrating a configuration example of an inhaler device. As illustrated in Fig. 1, an inhaler device 100 according to the present configuration example includes a power supply 111, a sensor 112, a notifier 113, a memory 114, a communicator 115, a controller 116, a heater 121, a holder 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch.

The notifier 113 provides information to the user. The notifier 113 may be a display device that outputs visual information such as light or an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (registered trademark), Bluetooth (registered trademark), or a standard using a low-power wide area (LPWA).

The controller 116 functions as an arithmetic processing unit and a control circuit, and controls the overall operations of the inhaler device 100 in accordance with various programs. The controller 116 includes an electronic circuit such as a central processing unit (CPU) or a microprocessor, for example.

The holder 140 has an internal space 141, and holds a stick substrate 150 in a manner partially accommodated in the internal space 141. The holder 140 has an opening 142 that allows the internal space 141 to communicate with outside. The holder 140 accommodates the stick substrate 150 that is inserted into the internal space 141 through the opening 142. For example, the holder 140 has a tubular body having the opening 142 and a bottom 143 on its ends, and defines the pillar-shaped internal space 141. The holder 140 connects with an airflow path that supplies air to the internal space 141. For example, a side surface of the inhaler device 100 has an air inlet hole that is an inlet of air into the airflow path. For example, the bottom 143 has an air outlet hole that is an outlet of the air from the airflow path to the internal space 141.

The stick substrate 150 includes a substrate 151 and an inhalation port 152. The substrate 151 includes an aerosol source. The aerosol source is, for example, a polyhydric alcohol such as glycerin and propylene glycol, and a liquid such as water. The aerosol source may include a flavor component that is either derived from tobacco or not derived from tobacco. For the inhaler device 100 that is a medical inhaler such as a nebulizer, the aerosol source may include a medicine. Note that, in the present configuration example, the aerosol source is not limited to a liquid, and may be a solid. The stick substrate 150 held by the holder 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the airflow path (not illustrated), and the air and an aerosol generated from the substrate 151 reach inside the mouth of the user

The heater 121 heats the aerosol source to atomize the aerosol source and generate the aerosol. In the example illustrated in Fig. 1, the heater 121 has a film-like shape and surrounds the outer circumference of the holder 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

In an example, the heater 121 may have a blade-like shape, and may be disposed so that the heater 121 protrudes from the bottom 143 of the holder 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the holder 140. In still another example, the heater 121 may be implemented as a combination of two or more selected from a first heater that covers the outer circumference of the holder 140, a second heater having the blade-like shape, and a third heater that covers the bottom 143 of the holder 140.

In another example, the holder 140 may include an opening/closing mechanism that at least partially opens and closes an outer shell defining the internal space 141. An example of the opening/closing mechanism includes a hinge. In addition, the holder 140 may sandwich the stick substrate 150 inserted into the internal space 141 by opening and closing the outer shell. In this case, the heater 121 may be at the sandwiching position of the holder 140 and may produce heat while pressing the stick substrate 150.

The stick substrate 150 includes an aerosol source and is an example of a substrate that contributes to the generation of an aerosol. The inhaler device 100 is an example of an aerosol generation device that heats the stick substrate 150 to generate an aerosol. The combination of the inhaler device 100 and the stick substrate 150 generates an aerosol. Therefore, the combination of the inhaler device 100 and the stick substrate 150 may be conceived as an aerosol generation system.

### <2. Technical Features>

### <2.1. Heating profile>

The controller 116 controls the operation of the heater 121 based on a heating profile. Control of the operation of the heater 121 is implemented by controlling the supply of electric power from the power supply 111 to the heater 121. The heater 121 heats the stick substrate 150 using the electric power supplied from the power supply 111.

A heating profile is control information for controlling the temperature at which the aerosol source is heated. The heating profile may be control information for controlling the temperature of the heater 121. In an example, the heating profile may include a target value for the temperature of the heater 121 (hereinafter also referred to as the target temperature). The target temperature may change according to the elapsed time since the start of heating. In that case, the heating profile includes information defining a time series transition of the target temperature. In another example, the heating profile may include parameters that define a method of supplying electric power to the heater 121 (hereinafter also referred to as power supply parameters). The power supply parameters include, for example, the voltage applied to the heater 121, the ON/OFF of the supply of electric power to the heater 121, the feedback control method to be adopted, or the like. The ON/OFF of the supply of electric power to the heater 121 may be perceived as the ON/OFF of the heater 121.

The controller 116 controls the operation of the heater 121 such that the temperature of the heater 121 (hereinafter also referred to as the actual temperature) transitions in the same or similar manner as the target temperature defined in the heating profile. The heating profile is typically designed to optimize the flavor the user tastes when inhaling an aerosol generated from the stick substrate 150. Thus, controlling the operation of the heater 121 based on the heating profile can optimize the flavor the user tastes.

Temperature control of the heater 121 can be implemented by known feedback control, for example. Feedback control may be performed by, for example, a PID controller (Proportional-Integral-Differential Controller). The controller 116 may cause the electric power from the power supply 111 to be supplied to the heater 121 in the form of pulses by pulse width modulation (PWM) or pulse frequency modulation (PFM). In that case, the controller 116 is able to control the temperature of the heater 121 by adjusting the duty ratio or frequency of the electric power pulses in the feedback control. Alternatively, the controller 116 may perform simple ON/OFF control in the feedback control. For example, the controller 116 may execute heating by the heater 121 until the actual temperature reaches the target temperature, interrupt the heating by the heater 121 when the actual temperature reaches the target temperature, and resume the heating by the heater 121 when the actual temperature falls below the target temperature.

The temperature of the heater 121 can be quantified, for example, by measuring or estimating the electrical resistance of the heater 121 (more precisely, a heat generating resistor constituting the heater 121). This is because the electrical resistance of the heat generating resistor changes according to the temperature. The electrical resistance of the heat generating resistor can be estimated, for example, by measuring the amount of voltage drop in the heat generating resistor. The amount of voltage drop in the heat generating resistor can be measured by a voltage sensor that measures the potential difference applied to the heat generating resistor. In another example, the temperature of the heater 121 can be measured by a temperature sensor, such as a thermistor, installed in the vicinity of the heater 121.

The period from the start to the end of a process of generating an aerosol using the stick substrate 150 is hereinafter also referred to as a heating session. In other words, a heating session is a period during which the supply of electric power to the heater 121 is controlled based on a heating profile. The start of the heating session is the timing at which heating based on the heating profile is started. The end of the heating session is the timing at which a sufficient amount of aerosol is no longer generated. The heating session includes a pre-heating period and a puff-enabled period subsequent to the pre-heating period. The puff-enabled period is a period during which a sufficient amount of aerosol is assumed to be generated. The pre-heating period is a period from the start of heating to the start of the puff-enabled period. Heating performed during the pre-heating period is also referred to as pre-heating.

An example of the heating profile is indicated in Table 1 below.

**[Table 1]**

| Table 1. Example of heating profile | | | | |
|---|---|---|---|---|
| Period | | Time series transition of target temperature | Time series transition of power supply parameters | |
| Category | Duration | | Voltage | ON/OFF |
| STEP 0 | - | Rise to 280°C (No time control) | High | ON |
| STEP 1 | 20 seconds | Rise to 300°C | High | ON |
| STEP 2 | 20 seconds | Maintain 300°C | High | ON |
| STEP 3 | - | Decrease to 220°C (No time control) | Switch to low | OFF |
| STEP 4 | 20 seconds | Rise to 270°C | Low | ON |
| STEP 5 | 20 seconds | | Low | ON |
| STEP 6 | 20 seconds | | Low | ON |
| STEP 7 | 20 seconds | | Low | ON |
| STEP 8 | 40 seconds | Maintain 270°C | Low | ON |
| STEP 9 | 20 seconds | - | Switch to high | OFF |

As indicated in Table 1, the heating profile is divided into multiple periods, in each of which a time series transition of the target temperature and a time series transition of the power supply parameters may be defined. In the example indicated in Table 1, the heating profile is divided into a total often periods STEP 0 to STEP 9. In each STEP, a time series transition of the target temperature and a time series transition of the power supply parameters are defined.

In STEPs 1 and 2 and STEP 4 to STEP 9, time control is implemented. Time control is a control that ends each STEP in response to a trigger indicating that a predetermined amount of time (that is, the duration set for each STEP) has elapsed. Note that, if time control is implemented, the rate of temperature change of the heater 121 may be controlled so that the temperature of the heater 121 reaches the target temperature at the end of the duration. Alternatively, if time control is implemented, the temperature of the heater 121 may be controlled so that the temperature of the heater 121 reaches the target temperature in the middle of the duration and then the temperature of the heater 121 is maintained at the target temperature until the duration elapses.

On the other hand, no time control is implemented in STEP 0 and STEP 3. If no time control is implemented, each STEP ends in response to a trigger indicating that the temperature of the heater 121 has reached a predetermined temperature (that is, the target temperature set for each STEP). Therefore, the duration of STEP 0 extends/shortens according to the rate of temperature rise. The duration of STEP 3 extends/shortens according to the rate of temperature fall.

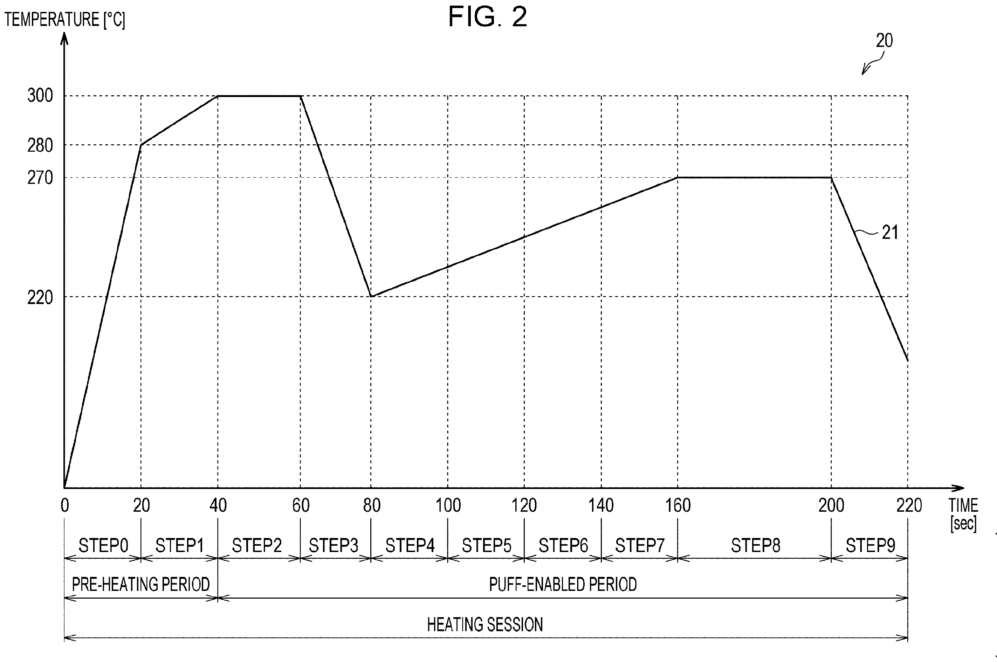

The transition of the temperature of the heater 121 in the case where the controller 116 performs temperature control according to the heating profile indicated in Table 1 will be described with reference to Fig. 2. Fig. 2 is a graph 20 illustrating an example of the transition of the temperature of the heater 121 in the case where temperature control is performed based on the heating profile indicated in Table 1. In the graph 20, time (seconds) is plotted on the horizontal axis. In the graph 20, the temperature of the heater 121 is plotted on the vertical axis. A line 21 indicates the transition of the temperature of the heater 121. As illustrated in Fig. 2, the temperature of the heater 121 transitions in the same or similar manner as the transition of the target temperature defined in the heating profile. Hereinafter, an example of the heating profile will be described with reference to Table 1 and Fig. 2.

As indicated in Table 1 and Fig. 2, in STEP 0, the temperature of the heater 121 rises from an initial temperature to 280°C. The initial temperature is the temperature of the heater 121 at the start of heating. In STEP 0, no time control is implemented. Therefore, STEP 0 ends in response to a trigger indicating that the temperature of the heater 121 has reached 280°C. In the example illustrated in Fig. 2, STEP 0 ends in 20 seconds. Subsequently, the temperature of the heater 121 rises to 300°C in STEP 1, and the temperature of the heater 121 is maintained at 300°C in STEP 2. The pre-heating period ends with the end of STEP 1, and the puff-enabled period begins with the start of STEP 2. Note that implementing no time control in STEP 0 does not prevent such control that, for example, if a predetermined temperature is not reached within a predetermined time, it is determined as an error and the heating is stopped.

For the user, a shorter pre-heating period is desirable. However, if the stick substrate 150 is not sufficiently heated, moisture inside the stick substrate 150 may not be sufficiently evaporated and remain there. If the user puffs in that state, hot water vapor may be delivered into the user's mouth. Therefore, it is desirable to rapidly raise the temperature of the heater 121 until it reaches 280°C in STEP 0, and to ensure the duration of STEP 1 to some extent. The duration of STEP 1 may be set to a length that varies, for example, depending on the initial temperature.

Here, in STEP 0 to STEP 2, the supply of electric power to the heater 121 is performed at a high voltage. Therefore, it becomes possible to raise the temperature of the heater 121 to 280°C at the maximum rate and maintain a high temperature thereafter. It also becomes possible to shorten the pre-heating period.

As indicated in Table 1 and Fig. 2, the temperature of the heater 121 falls to 220°C in STEP 3. In STEP 3, the supply of electric power to the heater 121 is turned OFF. Therefore, it becomes possible to reduce the temperature of the heater 121 at the maximum rate. In the meanwhile, the voltage applied to the heater 121 is switched from a high voltage to a low voltage. In the case of switching the voltage during a period in which electric power is supplied to the heater 121, the accuracy of temperature control may decrease due to factors such as noise on the gain of the PID controller. In this regard, by switching the voltage during a period in which no electric power is supplied to the heater 121, it becomes possible to prevent a decrease in the accuracy of temperature control involved in voltage switching.

As indicated in Table 1 and Fig. 2, the temperature of the heater 121 then rises slowly to 270°C in STEP 4 to STEP 7. As such, control information across multiple STEPs may be defined. Thereafter, the temperature of the heater 121 is maintained at 270°C in STEP 8.

Here, in STEP 4 to STEP 8, electric power is supplied to the heater 121 at a low voltage. In STEP 4 to STEP 8, there is no need to rapidly raise the temperature of the heater 121 or to maintain the heater 121 at a high temperature. By keeping a low voltage in STEP 4 to STEP 8, it becomes possible to suppress power consumption in the entire heating session.

As indicated in Table 1 and Fig. 2, the temperature of the heater 121 decreases in STEP 9. In STEP 9, the supply of electric power to the heater 121 is turned OFF. In the meanwhile, the voltage applied to the heater 121 is switched from a low voltage to a high voltage. This makes it possible to start the next heating session at a high voltage. Additionally, by switching the voltage during a period in which no electric power is supplied to the heater 121, it becomes possible to prevent a decrease in the accuracy of temperature control involved in voltage switching. In STEP 9, the duration is defined, while the target temperature is not. Therefore, STEP 9 ends in response to a trigger indicating the end of its duration. In STEP 9, a sufficient amount of aerosol may be generated by the residual heat of the stick substrate 150. Therefore, in this example, the puff-enabled period, i.e., the heating session, ends with the end of STEP 9.

The notifier 113 may notify the user of information indicating the timing at which the pre-heating ends. For example, the notifier 113 notifies the user of information indicating that the pre-heating is about to end before it actually ends, or of information indicating that the pre-heating has ended at the moment it actually ends. The user may be notified, for example, through illuminated LEDs or vibrations. Based on this notification, the user is able to start puffing immediately after the pre-heating ends.

Likewise, the notifier 113 may notify the user of information indicating the timing at which the puff-enabled period ends. For example, the notifier 113 notifies the user of information indicating that the puff-enabled period is about to end before it actually ends, or of information indicating that the puff-enabled period has ended at the moment it actually ends. The user may be notified, for example, through illuminated LEDs or vibrations. Based on this notification, the user is able to puff until the puff-enabled period ends.

Note that the heating profile described above is only one example, and various other examples are conceivable. In an example, the number of STEPs, the duration of each STEP, and the target temperature may be changed as appropriate. In another example, the temperature of the heater 121 may be maintained at 220°C in STEP 4.

### <2.2. Notification according to progress of heating>

The controller 116 controls the notifier 113 to provide first information in a mode based on information indicating the state of the inhaler device 100 detected at a start of heating the aerosol source during a pre-heating period from when the heater 121 starts heating the aerosol source until it becomes possible for the user to inhale an aerosol. The first information is information indicating the progress of the pre-heating. Depending on the state of the inhaler device 100 at the start of heating the stick substrate 150, the pre-heating period may extend/shorten. In this regard, according to such a configuration, information indicating the progress of the pre-heating can be provided in a more accurate mode taking into account the extension/shortening of the pre-heating period.

Note that "until it becomes possible for the user to inhale an aerosol" includes the meaning that it is assumed to be until a sufficient amount of aerosol is generated. That is, "until it becomes possible for the user to inhale an aerosol" includes the meaning that the stick substrate 150 becomes suitable for the user to inhale an aerosol, and it is acceptable not to prohibit the user from inhaling during the pre-heating. The pre-heating period may be regarded as a period including a period from when the heater 121 starts heating until the temperature of the heater 121 rises to a predetermined temperature (such as the target temperature for STEP 1). The pre-heating period may include not only a period during which the temperature of the heater 121 rises, but also a period during which the temperature of the heater 121 is maintained, like STEP 2. The pre-heating period may also include a period during which hunting, where the temperature of the heater 121 fluctuates up and down around the target temperature, is occurring. Alternatively, the pre-heating period may be regarded as a period from when the heater 121 starts heating to when the notifier 113 provides later-described second information.

Also, the start of heating, at which information indicating the state of the inhaler device 100 is detected, may include immediately after the start of heating based on the heating profile, or immediately before the start of heating based on the heating profile following the user's instruction to start heating.

Information indicating the state of the inhaler device 100 includes parameters corresponding to the temperature of the heater 121. That is, the controller 116 controls the notifier 113 to provide information indicating the progress of the pre-heating in a mode based on parameters corresponding to the initial temperature of the heater 121. Parameters corresponding to the temperature of the heater 121 include the electrical resistance of the heater 121, the temperature of the heater 121 calculated from the electrical resistance of the heater 121, and the temperature detected by a thermistor provided in the vicinity of the heater 121. Note that the sensor 112 is an example of a detector that detects information indicating the state of the inhaler device 100.

There may be cases where so-called chain smoking occurs, in which the stick substrate 150 is replaced and heated multiple times at short intervals. In cases where chain smoking occurs, the initial temperature of the heater 121 in the second and subsequent heating sessions is higher than the initial temperature of the heater 121 in the first heating session. The higher the initial temperature, the faster the heater 121 reaches a high temperature, thereby shortening the pre-heating period. Therefore, if no action is taken, there is a risk that the user may be notified of information indicating the progress of the pre-heating that differs from the actual progress of the pre-heating. In this regard, according to the present embodiment, it becomes possible to notify the user of information corresponding to the actual progress of the pre-heating, taking into account the extension/shortening of the pre-heating period due to the initial temperature of the heater 121.

The controller 116 may set a predetermined number of switching timings. Then, the controller 116 may control the notifier 113 to switch the notification mode of information indicating the progress of the pre-heating at each of the set predetermined number of switching timings. The predetermined number is any number greater than or equal to two. According to such a configuration, until the pre-heating ends, the notification mode of information indicating the progress of the pre-heating is switched the predetermined number of times. Accordingly, the user can intuitively understand the progress of the pre-heating based on how many times the notification mode of information indicating the progress of the pre-heating has been switched.

In particular, the controller 116 sets the predetermined number of switching timings based on parameters corresponding to the initial temperature of the heater 121. That is, the controller 116 controls the notifier 113 to switch the notification mode of information indicating the progress of the pre-heating at timings that take into account the extension/shortening of the pre-heating period according to the initial temperature. According to such a configuration, the user can intuitively understand the actual progress of the pre-heating.

Specifically, the controller 116 sets shorter intervals for the switching timings as the initial temperature of the heater 121, indicated by parameters corresponding to the initial temperature of the heater 121, is higher. The higher the initial temperature of the heater 121, the shorter the pre-heating period. In this regard, according to such a configuration, the user can intuitively understand that the pre-heating period is short based on the fact that the intervals for the switching timings are short. On the other hand, the controller 116 sets longer intervals for the switching timings as the initial temperature of the heater 121, indicated by parameters corresponding to the initial temperature of the heater 121, is lower. The lower the initial temperature of the heater 121, the longer the pre-heating period. In this regard, according to such a configuration, the user can intuitively understand that the pre-heating period is long based on the fact that the intervals for the switching timings are long.

The controller 116 may set the predetermined number of switching timings at regular intervals. For example, the controller 116 sets shorter regular intervals for the switching timings as the initial temperature of the heater 121 is higher, and sets longer regular intervals as the initial temperature of the heater 121 is lower. According to such a configuration, the number of times the notification mode of information indicating the progress of the pre-heating is switched and the elapsed time since the start of the pre-heating will have a linear relationship. Therefore, the user can intuitively understand the elapsed time since the start of the pre-heating and the remaining time until the end of the pre-heating based on the number of times the notification mode of information indicating the progress of the pre-heating has been switched.

The notifier 113 may include a display device having the predetermined number of display areas. That is, the notifier 113 may include a display device having the same number of display areas as the number of switching timings set. Then, the controller 116 may, as switching the notification mode of information indicating the progress of the pre-heating at the predetermined number of switching timings, increase the number of display areas performing a predetermined display among the predetermined number of display areas whenever the switching timings pass. According to such a configuration, the number of display areas performing a predetermined display gradually increases until the pre-heating ends. Accordingly, the user can intuitively understand the progress of the pre-heating.

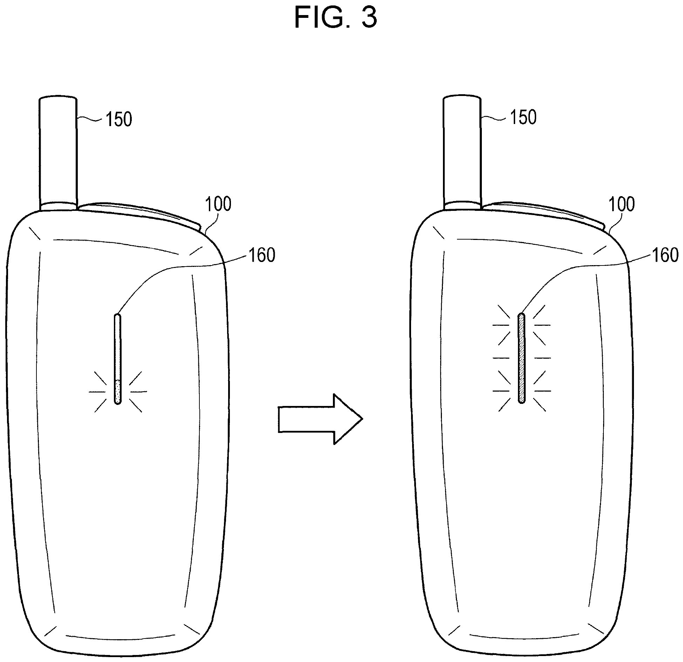

A notification of information indicating the progress of the pre-heating using a display device having a predetermined number of display areas will be specifically described with reference to Fig. 3.

Fig. 3 is a diagram for describing an example of a notification using a display device according to the present embodiment. On the left side of Fig. 3, the condition of the inhaler device 100 while pre-heating the stick substrate 150 is illustrated. On the right side of Fig. 3, the condition of the inhaler device 100 at the timing at which the pre-heating of the stick substrate 150 ends is illustrated. As illustrated in Fig. 3, the inhaler device 100 has an LED indicator 160. The LED indicator 160 is an example of a display device having the predetermined number of display areas. The LED indicator 160 may include the predetermined number of LEDs, for example, as the predetermined number of display areas. The LED indicator 160 can switch each of the predetermined number of LEDs ON and OFF, as well as switch between illuminating and blinking.

As illustrated in Fig. 3, the predetermined number of LEDs that make up the LED indicator 160 may form one longitudinal shape. Then, the controller 116 may increase the number of LEDs performing the predetermined display one by one from the end, whenever the switching timings pass. According to such a configuration, whenever the switching timings pass, the area for performing the predetermined display in the longitudinally-shaped LED indicator 160 is extended. Accordingly, the user can intuitively understand the progress of the pre-heating.

The LED indicator 160 may blink the LEDs to perform the predetermined display. According to such a configuration, based on the blinking LEDs, the user can intuitively understand that the pre-heating is in progress.

The controller 116 controls the notifier 113 to end the notification of information indicating the progress of the pre-heating when the pre-heating period ends. According to such a configuration, the user can intuitively understand the end of the pre-heating. Furthermore, the controller 116 controls the notifier 113 to provide second information, different from the first information, at the timing at which the pre-heating period ends. The second information is information indicating the end of the pre-heating. The second information is information also indicating that a puff can be performed. Based on such a notification, the user can start puffing immediately after the pre-heating ends.

The LED indicator 160 may illuminate all of the predetermined number of LEDs as a notification of information indicating the end of the pre-heating. According to such a configuration, based on all the LEDs of the LED indicator 160 being illuminated, the user can intuitively understand that the pre-heating has ended.

The notifier 113 may include a vibration device. Examples of the vibration device include an eccentric motor and a linear vibrator. The controller 116 may vibrate the vibration device as a notification of information indicating the end of the pre-heating. In this way, by notifying the user of the end of the pre-heating with tactile information in addition to visual information, it becomes possible to clearly communicate the end of the pre-heating to the user

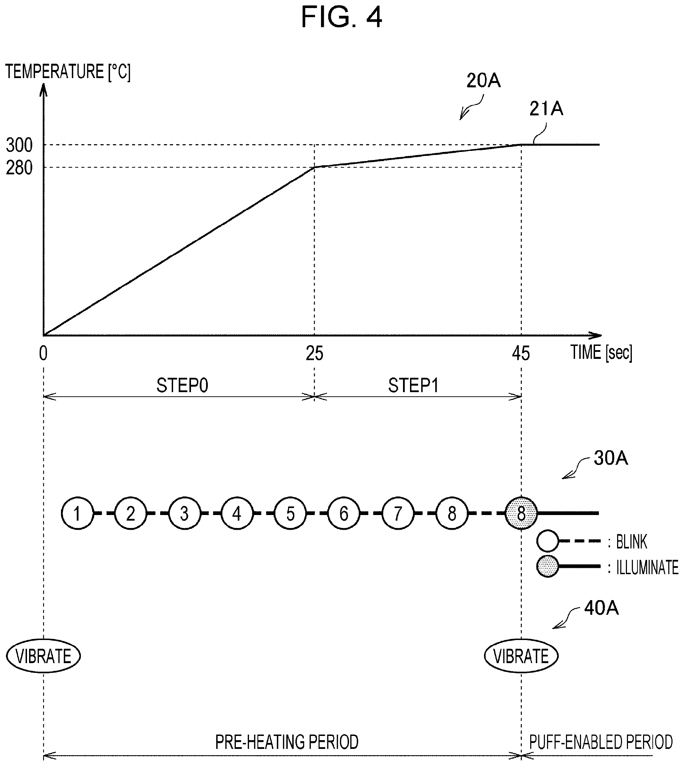

Hereinafter, a specific example of a notification according to the present embodiment will be described with reference to Fig 4. Fig. 4 is a diagram for describing an example of a notification according to the present embodiment.

The upper section of Fig. 4 depicts a graph 20A, illustrating an example of the temperature transition of the heater 121 in STEP 0 and STEP 1, when temperature control is performed based on the heating profile indicated in Table 1. In the graph 20A, time (seconds) is plotted on the horizontal axis. In the graph 20A, the temperature of the heater 121 is plotted on the vertical axis. A line 21A indicates the transition of the temperature of the heater 121. STEP 0 is a period during which no time control is implemented, and it ends in response to a trigger indicating that the temperature of the heater 121 has reached 280°C. Therefore, the time length of STEP 0 changes according to the initial temperature of the heater 121. On the other hand, STEP 1 is a period during which time control is implemented, and it ends in response to a trigger indicating that 20 seconds has elapsed. As described above, in the example illustrated in Fig. 4, the pre-heating period consists of STEP 0, which has a variable time, and STEP 1, which has a fixed time. In the example illustrated in Fig. 4, it takes 25 seconds for the temperature of the heater 121 to reach 280°C, that is, for STEP 0 to end. Then, STEP 1 ends 45 seconds after the start of heating, marking the end of the pre-heating.

The middle section of Fig. 4 depicts a timing chart 30A, illustrating the state of a notification by the LED indicator 160. In the timing chart 30A, a numbered circle without hatching, the position of the circle, and a dashed line following the circle indicate the number of blinking LEDs on the LED indicator 160, the timing to start blinking, and the duration of the blinking, respectively. In the timing chart 30A, a numbered circle with hatching, the position of the circle, and a solid line following the circle indicate the number of illuminated LEDs on the LED indicator 160, the timing to start illuminating, and the duration of the illumination, respectively.

The controller 116 sets the timing to start blinking each of the eight LEDs based on the initial temperature of the heater 121. In detail, first, the controller 116 sets the time until all eight LEDs start blinking based on the initial temperature of the heater 121. Specifically, the controller 116 sets the time until all eight LEDs start blinking to be shorter as the initial temperature of the heater 121 is higher and longer as the initial temperature of the heater 121 is lower. The controller 116 then controls the LED indicator 160 to increase the number of blinking LEDs at regular intervals obtained by dividing the time until all of the set eight LEDs start blinking into eight equal parts. Accordingly, as illustrated in Fig. 4, the number of blinking LEDs gradually increases at regular intervals from the start of the pre-heating, and all eight LEDs are blinking from the middle of the pre-heating period. The memory 114 may retain multiple predetermined temperature ranges as candidates for the initial temperature and the respective amounts of time until the blinking of LEDs corresponding to these temperature ranges starts, as multiple patterns. The controller 116 may then select a setting for the time until the blinking of LEDs starts, based on the initial temperature, from the multiple patterns stored in the memory 114.

Note that the controller 116 sets the time until all eight LEDs start blinking to be shorter than the shortest pre-heating period anticipated in the environment where the inhaler device 100 may be used. According to such a configuration, it becomes possible to prevent a situation where the pre-heating ends before all eight LEDs start blinking.

The controller 116 controls the LED indicator 160 to illuminate all eight LEDs when the pre-heating period ends. Accordingly, as illustrated in Fig. 4, the LED indicator 160 switches from a state where eight LEDs are blinking to a state where eight LEDs are illuminated at the timing at which the pre-heating period ends and the puff-enabled period starts.

The lower section of Fig. 4 depicts a timing chart 40A, illustrating the state of a notification by the vibration device. A circle filled with "vibrate" in the timing chart 40A indicates the timing at which the vibration device vibrates. As illustrated in Fig. 4, the controller 116 controls the vibration device to vibrate at the start and end of the pre-heating.

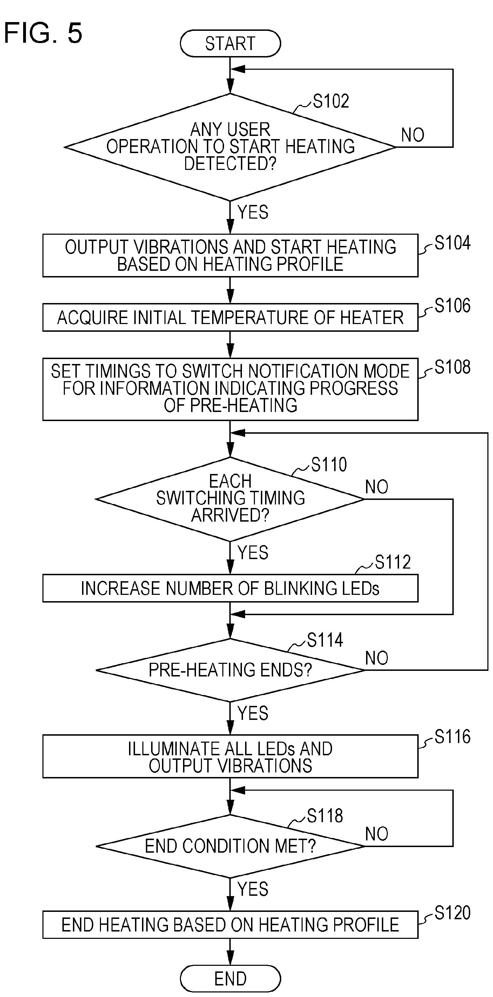

Next, the flow of a process for realizing the specific example illustrated in Fig. 4 will be described with reference to Fig. 5. Fig. 5 is a flowchart illustrating an example of the flow of a process executed by the inhaler device 100 according to the present embodiment.

As illustrated in Fig. 5, first, the controller 116 determines whether a user operation to start heating has been detected (step S102). An example of a user operation to start heating is an operation on the inhaler device 100, such as operating a switch or the like provided on the inhaler device 100. Another example of a user operation to start heating is inserting the stick substrate 150 into the inhaler device 100.

If it is determined that no user operation to start heating has been detected (step S102: NO), the controller 116 waits until a user operation to start heating is detected.

On the other hand, if it is determined that a user operation to start heating has been detected (step S102: YES), the controller 116 activates the vibration device to output vibrations, and to start heating based on a heating profile (step S104). For example, the controller 116 starts supplying electric power from the power supply 111 to the heater 121.

The sensor 112 then detects a parameter corresponding to the initial temperature of the heater 121 (step S106). In an example, as a parameter corresponding to the initial temperature of the heater 121, the temperature of the heater 121, calculated based on the electrical resistance of the heater 121 at the start of power supply to the heater 121, may be detected. Note that the initial temperature of the heater 121 may be detected by a temperature sensor, such as a thermistor, installed in the vicinity of the heater 121. The initial temperature of the heater 121 may be detected prior to the start of heating.

Next, the controller 116 sets the timings to switch the notification mode of information indicating the progress of the pre-heating based on the initial temperature of the heater 121 indicated by the parameter detected by the sensor 112 (step S108). For example, the controller 116 first sets the time until all eight LEDs start blinking to be shorter as the initial temperature of the heater 121 is higher and longer as the initial temperature of the heater 121 is lower. Note that the controller 116 sets the time until all eight LEDs start blinking within a range shorter than the shortest pre-heating period anticipated in the environment where the inhaler device 100 may be used. The controller 116 then sets the timings to switch the notification mode of information indicating the progress of the pre-heating at regular intervals obtained by dividing the time until all of the set eight LEDs start blinking into eight equal parts.

The controller 116 then determines whether each of the switching timings has arrived during the heating process based on the heating profile (step S110).

If it is determined that each of the switching timings has arrived (step S110: YES), the controller 116 increases the number of blinking LEDs on the LED indicator 160 (step S112). The process then proceeds to step S114. If it is determined that each of the switching timings has not arrived (step S110: NO), the process also proceeds to step S114.

In step S 114, the controller 116 determines whether the pre-heating has finished (step 5114).

If it is determined that the pre-heating has not finished (step S114: NO), the process returns again to step S110. On the other hand, if it is determined that the pre-heating has finished (step S114: YES), the controller 116 illuminates all eight LEDs on the LED indicator 160 and activates the vibration device to output vibrations (step S116). Thereafter, the controller 116 may continue to illuminate all eight LEDs on the LED indicator 160 until the end of the puff-enabled period.

After that, the controller 116 determines whether an end condition has been met (step S1 18). An example of the end condition is that the duration of STEP 9 has elapsed. Another example of the end condition is that the number of puffs since the start of heating has reached a predetermined number

If it is determined that the end condition has not been met (step S118: NO), the controller 116 waits until the end condition is met.

On the other hand, if it is determined that the end condition has been met (step S118: YES), the controller 116 ends the heating based on the heating profile (step S120). After that, the process ends.

Note that, if it is determined in step S102 that a user operation to start heating has been detected, the controller 116 may supply electric power to the heater 121 in order to acquire the initial temperature of the heater 121 before performing step S104, thereby acquiring the initial temperature of the heater 121. Then, the controller 116 may, after executing step S108, execute step S104. After that, the controller 116 executes steps from step S110 and onwards as described above.

The flow of the process executed by the inhaler device 100 according to the present embodiment has been described above.

According to the present embodiment, the controller 116 sets in advance the timings to start blinking LEDs based on the initial temperature of the heater 121. Therefore, the number of LEDs that start blinking increases according to a fixed rhythm. Accordingly, it becomes easier for the user to predict the time until the pre-heating ends, as compared to the case where the timings to start blinking LEDs are set in real time in accordance with the actual temperature transition of the heater 121.

In particular, in the present embodiment, the pre-heating period includes STEP 0, where no time control is implemented. This allows the temperature of the heater 121 to reach the target temperature at the earliest timing in STEP 0, considering given conditions such as the initial temperature of the heater 121 and the outside air temperature. In the present embodiment, while utilizing such advantages, it becomes easier for the user to predict the time until the pre-heating ends due to the notification of the pre-heating progress at a fixed rhythm.

### <3. Supplement>

Although the preferred embodiment of the present invention has been described in detail above with reference to the accompanying drawings, the present invention is not limited to such an example. It is obvious that those with ordinary skill in the art to which the present invention pertains may conceive various modifications or variations within the scope of the technical concepts described in the claims, and these are understood to naturally fall within the technical scope of the present invention.

### (1) First modification

Although an example has been described in the above embodiment in which the time until all eight LEDs start blinking is set to be shorter than the shortest pre-heating period anticipated in the environment where the inhaler device 100 may be used, the present invention is not limited to such an example. The time until all eight LEDs start blinking may be set to be longer than the shortest pre-heating period anticipated in the environment where the inhaler device 100 may be used. That is, the pre-heating may end before all eight LEDs start blinking.

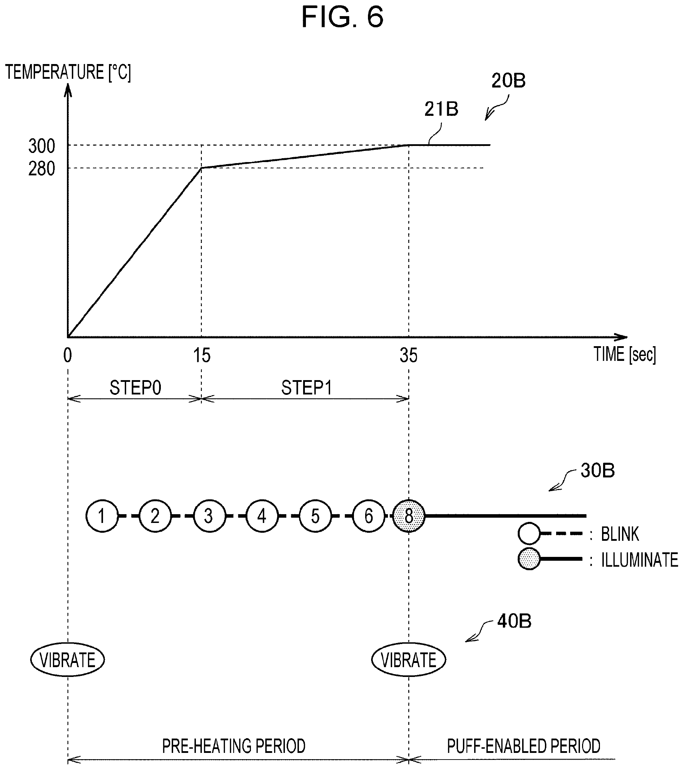

A specific example of the above will be described with reference to Fig. 6. Fig. 6 is a diagram for describing an example of a notification according to the present modification. The meaning of an element identified by a number followed by the letter B in Fig. 6 is the same as or similar to the meaning of an element identified by the same number followed by the letter A in Fig. 4.

The upper section of Fig. 6 depicts a graph 20B, illustrating an example of the temperature transition of the heater 121 in STEP 0 and STEP 1, when temperature control is performed based on the heating profile indicated in Table 1. The graph 20B illustrated in Fig. 6 is basically the same as the graph 20A illustrated in Fig. 4. The difference between the graph 20A and the graph 20B is the duration of STEP 0, where no time control is implemented. In the graph 20B, it takes 15 seconds for the temperature of the heater 121 to reach 280°C, that is, for STEP 0 to end. Then, STEP 1 ends 35 seconds after the start of heating, marking the end of the pre-heating.

The middle section of Fig. 6 depicts a timing chart 30B, illustrating the state of a notification by the LED indicator 160. The controller 116 sets the timing to start blinking each of the eight LEDs based on the initial temperature of the heater 121. Note that the controller 116 sets the time until all eight LEDs start blinking to be longer than the pre-heating period anticipated in the case where the pre-heating ends earliest in the environment where the inhaler device 100 may be used. As a result, in the example illustrated in Fig. 6, the pre-heating ends between the time the number of blinking LEDs increases from six to seven. The controller 116 controls the LED indicator 160 to illuminate all eight LEDs when the pre-heating period ends. Accordingly, as illustrated in Fig. 6, the LED indicator 160 switches from a state where six LEDs are blinking to a state where eight LEDs are illuminated at the timing at which the pre-heating period ends and the puff-enabled period starts.

The lower section of Fig. 6 depicts a timing chart 40B, illustrating the state of a notification by the vibration device. As illustrated in Fig. 6, the controller 116 controls the vibration device to vibrate at the start and end of the pre-heating.

In the present modification, the same or similar effects as those in the above-described embodiment are achieved.

That is, according to the present modification, the controller 116 sets in advance the timings to start blinking LEDs based on the initial temperature of the heater 121. Therefore, the number of LEDs that start blinking increases according to a fixed rhythm. Accordingly, it becomes easier for the user to predict the time until the pre-heating ends, as compared to the case where the timings to start blinking LEDs are set in real time in accordance with the actual temperature transition of the heater 121.

In particular, in the present modification, the pre-heating period includes STEP 0, where no time control is implemented. This allows the temperature of the heater 121 to reach the target temperature at the earliest timing in STEP 0, considering given conditions such as the initial temperature of the heater 121 and the outside air temperature. In the present embodiment, while utilizing such advantages, it becomes easier for the user to predict the time until the pre-heating ends due to the notification of the pre-heating progress at a fixed rhythm.

### (2) Second modification

Although an example in which the pre-heating period includes a period during which no time control is implemented has been described in the above embodiment, the present invention is not limited to such an example. The pre-heating period may include only a period during which time control is implemented. For example, time control may be implemented in STEP 0 in the heating profile indicated in Table 1.

In this case, the controller 116 may set the time length of the pre-heating period based on the initial temperature of the heater 121, indicated by information detected by the sensor 112. For example, the controller 116 sets the duration of STEP 0 based on the initial temperature of the heater 121. At that time, the controller 116 sets a shorter duration for STEP 0 as the initial temperature of the heater 121 is higher, and sets a longer duration for STEP 0 as the initial temperature of the heater 121 is lower. Accordingly, the controller 116 sets a shorter time length for the pre-heating period as the initial temperature of the heater 121 is higher, and sets a longer time length for the pre-heating period as the initial temperature of the heater 121 is lower. According to such a configuration, the duration of STEP 0 can be set to a time length that allows the target temperature to be reached effortlessly.

The controller 116 sets the timings, obtained by dividing the pre-heating period of the set time length into a predetermined number of equal parts, as the predetermined number of switching timings. For example, the controller 116 sets the timings, obtained by dividing the pre-heating period of the set time length into equal parts corresponding to the number of LEDs on the LED indicator 160, as the timings to increase the number of blinking LEDs. According to such a configuration, the number of blinking LEDs will increase at regular intervals from the start to the end of the pre-heating. Thus, the user can more accurately predict the time until the pre-heating ends.

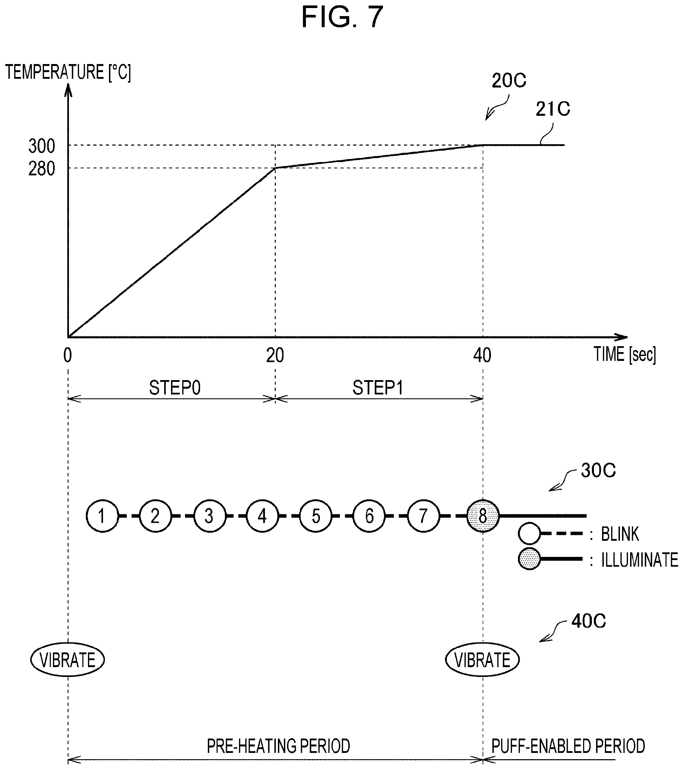

A specific example of the above will be described with reference to Fig. 7. Fig. 7 is a diagram for describing an example of a notification according to the present modification. The meaning of an element identified by a number followed by the letter C in Fig. 7 is the same as or similar to the meaning of an element identified by the same number followed by the letter A in Fig. 4.

The upper section of Fig. 7 depicts a graph 20C, illustrating an example of the temperature transition of the heater 121 in STEP 0 and STEP 1, when temperature control is performed based on a heating profile obtained by changing the heating profile indicated in Table 1 so that time control is implemented in STEP 0. The graph 20C illustrated in Fig. 7 is basically the same as the graph 20A illustrated in Fig. 4. The difference between the graph 20A and the graph 20C is the point that time control is implemented in STEP 0, and its duration is set to 20 seconds. That is, the controller 116 controls the rate of rise of the temperature of the heater 121 so that the temperature of the heater 121 reaches 280°C 20 seconds after the start of heating. As a result, STEP 0 ends 20 seconds after the start of heating. Then, STEP 1 ends 40 seconds after the start of heating, marking the end of the pre-heating.

The middle section of Fig. 7 depicts a timing chart 30C, illustrating the state of a notification by the LED indicator 160. The controller 116 sets the timing to start blinking each of the eight LEDs based on the initial temperature of the heater 121. In detail, first, the controller 116 sets the time length of the pre-heating period (more precisely, the time length of STEP 0) according to the initial temperature of the heater 121. Then, the controller 116 sets the timings to increase the number of blinking LEDs at regular intervals obtained by dividing the set time length of the pre-heating period into eight equal parts. Accordingly, as illustrated in Fig. 7, the number of blinking LEDs gradually increases at regular intervals from the start of the pre-heating, and the pre-heating ends at the timing at which all eight LEDs start blinking. The controller 116 controls the LED indicator 160 to illuminate all eight LEDs when the pre-heating period ends. Accordingly, as illustrated in Fig. 7, the LED indicator 160 switches from a state where seven LEDs are blinking to a state where eight LEDs are illuminated at the timing at which the pre-heating period ends and the puff-enabled period starts.

The lower section of Fig. 7 depicts a timing chart 40C, illustrating the state of a notification by the vibration device. As illustrated in Fig. 7, the controller 116 controls the vibration device to vibrate at the start and end of the pre-heating.

In the present modification, the same or similar effects as those in the above-described embodiment are achieved.

That is, according to the present modification, the controller 116 sets in advance the timings to start blinking LEDs based on the initial temperature of the heater 121. Therefore, the number of LEDs that start blinking increases according to a fixed rhythm. Accordingly, it becomes easier for the user to predict the time until the pre-heating ends, as compared to the case where the timings to start blinking LEDs are set in real time in accordance with the actual temperature transition of the heater 121.

Note that, in the present modification, the pre-heating period consists only of STEPs in which time control is implemented. Therefore, the time length of the pre-heating period is set to a fixed value according to the initial temperature of the heater 121. Thus, unlike the above embodiment and the above first modification, the timing at which the number of blinking LEDs increases to eight can be synchronized with the timing at which the pre-heating ends. Since the number of blinking LEDs increases at equal intervals, it becomes even easier for the user to predict the time until the end of the pre-heating.

### (3) Other modifications

Although an example in which the LED indicator 160 has eight LEDs has been described in the above embodiment, the present invention is not limited to such an example. The LED indicator 160 may have any number of LEDs that is two or more

Although an example in which the number of blinking LEDs on the LED indicator 160 increases at regular intervals has been described in the above embodiment, the present invention is not limited to such an example. The intervals at which the number of blinking LEDs on the LED indicator 160 increases may be variable, such as gradually increasing or gradually decreasing.

Although an example of increasing the number of blinking LEDs has been described in the above embodiment as an example of increasing the number of display areas performing a predetermined display among a predetermined number of display areas whenever the switching timings pass, the present invention is not limited to such an example. For example, the predetermined display is not limited to the blinking of LEDs and may also involve turning off the LEDs. That is, eight LEDs may begin to illuminate at the start of the pre-heating, and the number of illuminated LEDs may gradually decrease as the pre-heating progresses.

Although the LED indicator 160 configured in a longitudinal shape has been described in the above embodiment as an example of a display device that provides information indicating the progress of the pre-heating and information indicating the end of the pre-heating, the present invention is not limited to such an example. A display configured in a longitudinal shape may be used as another example of the display device. For example, the display may provide information indicating the progress of the pre-heating by increasing the number of areas that blink in white, and provide information indicating the end of the pre-heating by displaying all areas in white.

Although an example of increasing the number of display areas performing a predetermined display according to the progress of the pre-heating has been described in the above embodiment, the present invention is not limited to such an example. The blinking speed of the LEDs may be changed or the color of the emitted light may be changed according to the progress of the pre-heating. In this case, the number of display areas of the display device is not limited to two or more, and may be one.

In the above embodiment, the parameters corresponding to the temperature of the heater 121 include the electrical resistance of the heater 121, the temperature of the heater 121 calculated from the electrical resistance of the heater 121, and the temperature detected by the thermistor provided in the vicinity of the heater 121. However, the invention is not limited to such examples. In an example, a parameter corresponding to the temperature of the inhaler device 100 may be used as a parameter corresponding to the temperature of the heater 121. The parameter corresponding to the temperature of the inhaler device 100 may be, for example, a temperature detected by a thermistor located at a distance from the heater 121. It may be treated that the higher the temperature of the inhaler device 100 at the start of heating, the higher the initial temperature of the heater 121, and the lower the temperature of the inhaler device 100 at the start of heating, the lower the initial temperature of the heater 121. In another example, as a parameter corresponding to the temperature of the heater 121, the elapsed time since the end of the last heating by the heater 121, that is, the intervals between chain smokes, may be used. It may be treated that the shorter the intervals between chain smokes, the higher the initial temperature of the heater 121, and the longer the intervals between chain smokes, the lower the initial temperature of the heater 121.

Although an example in which the heating profile includes a target value for the temperature of the heater 121 has been described in the above embodiment, the present invention is not limited to such an example. The heating profile may include a target value for a parameter regarding the temperature of the heater 121. Parameters regarding the temperature of the heater 121 include, in addition to the temperature of the heater 121 itself described in the above embodiment, the electrical resistance of the heater 121.

Although an example in which the heater 121 is configured as a heat generating resistor and is heated by electrical resistance has been described in the above embodiment, the present invention is not limited to such an example. For example, the heater 121 may include an electromagnetic induction source, such as a coil that generates a magnetic field, and a susceptor that produces heat by the induction heating, and the susceptor may heat the stick substrate 150. In this case, the controller 116 applies an alternating current to the electromagnetic induction source to generate an alternating magnetic field, and allows the alternating magnetic field to penetrate the susceptor, thereby causing the susceptor to produce heat. The susceptor producing heat by induction heating is provided in the inhaler device 100. In this case, the temperature at which the aerosol source is heated, which is controlled based on a heating profile, is the temperature of the susceptor. The temperature of the susceptor can be estimated based on the electrical resistance of the susceptor calculated from factors such as the impedance of a circuit including the electromagnetic induction source. Parameters corresponding to the temperature of the heater 121 include the calculated electrical resistance of the susceptor, the temperature of the susceptor calculated from the electrical resistance of the susceptor, and the temperature detected by a thermistor provided in the vicinity of the heater 121.

Note that a series of processes performed by each device described in the present specification may be implemented using software, hardware, and a combination of software and hardware. Programs constituting the software are pre-stored, for example, on a recording medium (in detail, a computer-readable non-transitory storage medium) provided inside or outside each device. Each program is then loaded into a RAM upon execution by, for example, a computer controlling each device described in the present specification, and executed by a processing circuit, such as a CPU. The recording medium includes, for example, a magnetic disk, an optical disk, a magneto-optical disk, a flash memory, and the like. Additionally, the computer programs mentioned above may also be delivered, for example, over a network, without the use of a recording medium. Moreover, the computer mentioned above may be an application-specific integrated circuit such as an ASIC, a general-purpose processor that executes functions by loading software programs, a computer on a server used for cloud computing, or the like. Also, a series of processes performed by each device described in the present specification may be distributed among and processed by multiple computers.

Furthermore, the processes described using the flowcharts and sequence diagrams in the present specification may not necessarily be executed in the order illustrated. Some processing steps may be executed in parallel. Moreover, additional processing steps may also be employed, and some of the processing steps may be omitted.

The following configurations also fall within the technical scope of the present invention.
(1) An aerosol generation system including:
   a detector that detects information indicating a state of the aerosol generation system;
   a notifier that notifies a user of the information;
   a heater that heats an aerosol source to generate an aerosol; and
   a controller that controls the notifier to provide first information in a mode based on the information detected by the detector at a start of heating the aerosol source during a pre-heating period including a period from when the heater starts heating the aerosol source until a temperature of the heater rises to a predetermined temperature.
(2) The aerosol generation system according to (1) described above, wherein:
   the information indicating the state of the aerosol generation system is a parameter corresponding to the temperature of the heater.
(3) The aerosol generation system according to (1) or (2) described above, wherein:
   the controller sets a predetermined number of switching timings based on the information detected by the detector at the start of heating the aerosol source, and controls the notifier to switch a notification mode of the first information at each of the set predetermined number of switching timings.
(4) The aerosol generation system according to (3) described above, wherein:
   the controller sets shorter intervals between the switching timings as the temperature of the heater at the start of heating the aerosol source, as indicated by the information detected by the detector, is higher.
(5) The aerosol generation system according to (4) described above, wherein:
   the controller sets the predetermined number of switching timings at regular intervals.
(6) The aerosol generation system according to any one of (1) to (5) described above, wherein:
   the controller controls the notifier to end a notification of the first information in a case where the pre-heating period ends.
(7) The aerosol generation system according to any one of (1) to (6) described above, wherein:
   the pre-heating period includes a period that ends in response to a trigger indicating that a predetermined amount of time has elapsed.
(8) The aerosol generation system according to (7) described above, wherein:
   the controller sets a time length of the pre-heating period based on the temperature of the heater at the start of heating the aerosol source, as indicated by the information detected by the detector
(9) The aerosol generation system according to (8) described above indirectly citing (3) described above, wherein:
   the controller sets timings, obtained by dividing the pre-heating period of the set time length into the predetermined number of equal parts, as the predetermined number of switching timings.
(10) The aerosol generation system according to any one of (1) to (7) described above, wherein:
   the pre-heating period includes a period that ends in response to a trigger indicating that the temperature of the heater has reached a predetermined temperature.
(11) The aerosol generation system according to any one of (4) to (10) described above directly or indirectly citing (3) described above, wherein:
   the notifier includes a display device having the predetermined number of display areas; and
   the controller, as switching the notification mode of the first information at the predetermined number of switching timings, increases a number of display areas performing a predetermined display among the predetermined number of display areas whenever the switching timings pass.
(12) The aerosol generation system according to (11) described above, wherein:
   the predetermined number of display areas form one longitudinal shape.
(13) The aerosol generation system according to (11) or (12) described above, wherein:
   the display device, as performing the predetermined display, blinks the display area(s).
(14) The aerosol generation system according to any one of (1) to (13) described above, wherein:
   the controller controls the notifier to provide second information, different from the first information, at a timing at which the pre-heating period ends.
(15) The aerosol generation system according to (14) described above directly or indirectly citing (3) described above, wherein:
   the notifier includes a display device having the predetermined number of display areas; and
   the display device illuminates all of the predetermined number of display areas as a notification of the second information.
(16) The aerosol generation system according to any (14) or (15) described above, wherein:
   the notifier includes a vibration device; and
   the vibration device vibrates as a notification of the second information.
(17) The aerosol generation system according to any one of (1) to (16) described above, wherein:
   the information indicating the state of the aerosol generation system includes a parameter corresponding to a temperature of the aerosol generation system or an elapsed time since an end of last heating by the heater.
(18) The aerosol generation system according to any one of (1) to (17) described above, wherein:
   the aerosol generation system further includes a substrate including the aerosol source heated by the heater
(19) A control method for controlling an aerosol generation system,
   the aerosol generation system including
   a detector that detects information indicating a state of the aerosol generation system,
   a notifier that notifies a user of the information, and
   a heater that heats an aerosol source to generate an aerosol,
   the control method comprising:
      controlling the notifier to provide first information in a mode based on the information detected by the detector at a start of heating the aerosol source during a pre-heating period including a period from when the heater starts heating the aerosol source until a temperature of the heater rises to a predetermined temperature.
(20) A program executed by a computer controlling an aerosol generation system,
   the aerosol generation system including
   a detector that detects information indicating a state of the aerosol generation system,
   a notifier that notifies a user of the information, and
   a heater that heats an aerosol source to generate an aerosol,
   the program causing the computer to function as:
      a controller that controls the notifier to provide first information in a mode based on the information detected by the detector at a start of heating the aerosol source during a pre-heating period including a period from when the heater starts heating the aerosol source until a temperature of the heater rises to a predetermined temperature.

### Reference Signs List

- 100: inhaler device
- 111: power supply
- 112: sensor
- 113: notifier
- 114: memory
- 115: communicator
- 116: controller
- 121: heater
- 140: holder
- 141: internal space
- 142: opening
- 143: bottom
- 144: heat insulator
- 150: stick substrate
- 151: substrate
- 152: inhalation port
- 160: LED indicator

## Claims

1. An aerosol generation system comprising:
a detector that detects information indicating a state of the aerosol generation system;
a notifier that notifies a user of the information;
a heater that heats an aerosol source to generate an aerosol; and
a controller that controls the notifier to provide first information in a mode based on the information detected by the detector at a start of heating the aerosol source during a pre-heating period including a period from when the heater starts heating the aerosol source until a temperature of the heater rises to a predetermined temperature.

2. The aerosol generation system according to claim 1, wherein:
the information indicating the state of the aerosol generation system is a parameter corresponding to the temperature of the heater.

3. The aerosol generation system according to claim 1 or 2, wherein:
the controller sets a predetermined number of switching timings based on the information detected by the detector at the start of heating the aerosol source, and controls the notifier to switch a notification mode of the first information at each of the set predetermined number of switching timings.

4. The aerosol generation system according to claim 3, wherein:
the controller sets shorter intervals between the switching timings as the temperature of the heater at the start of heating the aerosol source, as indicated by the information detected by the detector, is higher.

5. The aerosol generation system according to claim 4, wherein:
the controller sets the predetermined number of switching timings at regular intervals.

6. The aerosol generation system according to any one of claims 1 to 5, wherein:
the controller controls the notifier to end a notification of the first information in a case where the pre-heating period ends.

7. The aerosol generation system according to any one of claims 1 to 6, wherein:
the pre-heating period includes a period that ends in response to a trigger indicating that a predetermined amount of time has elapsed.

8. The aerosol generation system according to claim 7, wherein:
the controller sets a time length of the pre-heating period based on the temperature of the heater at the start of heating the aerosol source, as indicated by the information detected by the detector.

9. The aerosol generation system according to claim 8 indirectly citing claim 3, wherein:
the controller sets timings, obtained by dividing the pre-heating period of the set time length into the predetermined number of equal parts, as the predetermined number of switching timings.

10. The aerosol generation system according to any one of claims 1 to 7, wherein:
the pre-heating period includes a period that ends in response to a trigger indicating that the temperature of the heater has reached a predetermined temperature.

11. The aerosol generation system according to any one of claims 4 to 10 directly or indirectly citing claim 3, wherein:
the notifier includes a display device having the predetermined number of display areas; and
the controller, as switching the notification mode of the first information at the predetermined number of switching timings, increases a number of display areas performing a predetermined display among the predetermined number of display areas whenever the switching timings pass.

12. The aerosol generation system according to claim 11, wherein:
the predetermined number of display areas form one longitudinal shape.

13. The aerosol generation system according to claim 11 or 12, wherein:
the display device, as performing the predetermined display, blinks the display area(s).

14. The aerosol generation system according to any one of claims 1 to 13, wherein:
the controller controls the notifier to provide second information, different from the first information, at a timing at which the pre-heating period ends.

15. The aerosol generation system according to claim 14 directly or indirectly citing claim 3, wherein:
the notifier includes a display device having the predetermined number of display areas; and
the display device illuminates all of the predetermined number of display areas as a notification of the second information.

16. The aerosol generation system according to claim 14 or 15, wherein:
the notifier includes a vibration device; and
the vibration device vibrates as a notification of the second information.

17. The aerosol generation system according to any one of claims 1 to 16, wherein:
the information indicating the state of the aerosol generation system includes a parameter corresponding to a temperature of the aerosol generation system or an elapsed time since an end of last heating by the heater.

18. The aerosol generation system according to any one of claims 1 to 17, wherein:
the aerosol generation system further comprises a substrate including the aerosol source heated by the heater.

19. A control method for controlling an aerosol generation system,
the aerosol generation system including
a detector that detects information indicating a state of the aerosol generation system,
a notifier that notifies a user of the information, and
a heater that heats an aerosol source to generate an aerosol,
the control method comprising:
controlling the notifier to provide first information in a mode based on the information detected by the detector at a start of heating the aerosol source during a pre-heating period including a period from when the heater starts heating the aerosol source until a temperature of the heater rises to a predetermined temperature.

20. A program executed by a computer controlling an aerosol generation system,
the aerosol generation system including
a detector that detects information indicating a state of the aerosol generation system,
a notifier that notifies a user of the information, and
a heater that heats an aerosol source to generate an aerosol,
the program causing the computer to function as:
a controller that controls the notifier to provide first information in a mode based on the information detected by the detector at a start of heating the aerosol source during a pre-heating period including a period from when the heater starts heating the aerosol source until a temperature of the heater rises to a predetermined temperature.
